# EUROPEAN PATENT SPECIFICATION

(11) **EP 3 470 492 B1**
(45) Date of publication and mention of the grant of the patent: **28.04.2021**
(21) Application number: 18208197.6
(22) Date of filing: 03.03.2006
(51) Int. Cl.: C09K 5/04, C10M 171/00

(54) **COMPOSITIONS COMPRISING HFC-1234ZE AND HFC-227EA**
ZUSAMMENSETZUNGEN MIT HFC-1234ZE UND HFC-227EA
COMPOSITIONS COMPORTANT DU HFC-1234ZE ET DU HFC-227EA

(30) Priority: 04.03.2005 US 65854305 P; 23.08.2005 US 71043905 P; 01.11.2005 US 73276905 P
(43) Date of publication of application: 17.04.2019
(62) Divisional of application: 18182081.2
(73) Proprietor: The Chemours Company FC, LLC, Wilmington DE 19801 (US)
(72) Inventor: Rao, Velliyur Nott Mallikarjuna, deceased (US); Minor, Barbara Haviland, Elkton, MD Maryland 21921 (US)
(74) Representative: Dannenberger, Oliver Andre

(56) References cited:
- WO-A1-2005/103192
- WO-A1-2005/108522
- US-A- 5 149 453
- US-A1- 2004 127 383

## Description

### CROSS REFERENCE(S) TO RELATED APPLICATION(S)

This application claims the priority benefit of U.S. Provisional Application 60/658,543, filed March 4, 2005, and U.S. Provisional Application 60/710,439, filed August 23, 2005, and U.S. Provisional Application 60/732,769, filed November 1, 2005.

### BACKGROUND OF THE INVENTION

### 1. Field of the Invention.

The present invention relates to compositions for use in refrigeration, air-conditioning, and heat pump systems wherein the composition comprises a fluoroolefin and at least one other component. The compositions of the present invention are useful in processes for producing cooling or heat, and as heat transfer fluids. 2. Description of Related Art.

The refrigeration industry has been working for the past few decades to find replacement refrigerants for the ozone depleting chlorofluorocarbons (CFCs) and hydrochlorofluorocarbons (HCFCs) being phased out as a result of the Montreal Protocol. The solution for most refrigerant producers has been the commercialization of hydrofluorocarbon (HFC) refrigerants. The new HFC refrigerants, HFC-134a being the most widely used at this time, have zero ozone depletion potential and thus are not affected by the current regulatory phase out as a result of the Montreal Protocol.

Further environmental regulations may ultimately cause global phase out of certain HFC refrigerants. Currently, the automobile industry is facing regulations relating to global warming potential for refrigerants used in mobile air-conditioning. Therefore, there is a great current need to identify new refrigerants with reduced global warming potential for the mobile air-conditioning market. Should the regulations be more broadly applied in the future, an even greater need will be felt for refrigerants that can be used in all areas of the refrigeration and air-conditioning industry.

Currently proposed replacement refrigerants for HFC-134a include HFC-152a, pure hydrocarbons such as butane or propane, or "natural" refrigerants such as CO₂. Many of these suggested replacements are toxic, flammable, and/or have low energy efficiency. Therefore, new alternative refrigerants are being sought.

US 2004/127383 A1 discloses azeotrope-like compositions comprising pentafluoropropene (HFO-1225) and one or more of 3,3,3-trifluoropropene (HFO-1243zf), 1,1-difluoroethane (HFC-152a) and trans-1,3,3,3-tetrafluoropropene (HFO-1234ze).

The object of the present invention is to provide novel refrigerant compositions and heat transfer fluid compositions that provide unique characteristics to meet the demands of low or zero ozone depletion potential and lower global warming potential as compared to current refrigerants.

### BRIEF SUMMARY OF THE INVENTION

The present invention relates to a composition comprising 1 to 98 weight percent HFC-227ea, 1 to 98 weight percent trans-HFC-1234ze and up to 98 weight percent HFC-1225ye; 1 to 98 weight percent HFC-227ea, 1 to 98 weight percent trans-HFC-1234ze and up to 98 weight percent HFC-1243zf; 1 to 98 weight percent HFC-227ea, 1 to 98 weight percent trans-HFC-1234ze and up to 98 weight percent HFC-134; or 1 to 98 weight percent HFC-227ea, 1 to 98 weight percent trans-HFC-1234ze and up to 40 weight percent n-butane; preferably 10 to 80 weight percent HFC-227ea, 10 to 80 weight percent trans-HFC-1234ze and up to 80 weight percent HFC-1225ye; 10 to 80 weight percent HFC-227ea, 10 to 80 weight percent trans-HFC-1234ze and up to 80 weight percent HFC-1243zf; 10 to 80 weight percent HFC-227ea, 10 to 80 weight percent trans-HFC-1234ze and up to 80 weight percent HFC-134; or 10 to 80 weight percent HFC-227ea, 10 to 80 weight percent trans-HFC-1234ze and up to 30 weight percent n-butane.

The present invention further relates to a composition as defined in claims 2 to 9, to a method as defined in claims 10 to 13, and to a refrigeration apparatus, air-conditioning apparatus or heat pump apparatus as defined in claim 14.

### DETAILED DESCRIPTION OF THE INVENTION

The present invention relates to compositions comprising 1 to 98 weight percent HFC-227ea, 1 to 98 weight percent trans-HFC-1234ze and up to 98 weight percent HFC-1225ye; 1 to 98 weight percent HFC-227ea, 1 to 98 weight percent trans-HFC-1234ze and up to 98 weight percent HFC-1243zf; 1 to 98 weight percent HFC-227ea, 1 to 98 weight percent trans-HFC-1234ze and up to 98 weight percent HFC-134; or 1 to 98 weight percent HFC-227ea, 1 to 98 weight percent trans-HFC-1234ze and up to 40 weight percent n-butane; preferably 10 to 80 weight percent HFC-227ea, 10 to 80 weight percent trans-HFC-1234ze and up to 80 weight percent HFC-1225ye; 10 to 80 weight percent HFC-227ea, 10 to 80 weight percent trans-HFC-1234ze and up to 80 weight percent HFC-1243zf; 10 to 80 weight percent HFC-227ea, 10 to 80 weight percent trans-HFC-1234ze and up to 80 weight percent HFC-134; or 10 to 80 weight percent HFC-227ea, 10 to 80 weight percent trans-HFC-1234ze and up to 30 weight percent n-butane.

Fluoroolefin compounds and other compounds are listed in Table 1.

**TABLE 1**

| **Compound** | **Chemical name** | **Chemical formula** |
|---|---|---|
| HFC-1225ye | 1,2,3,3,3-pentafluoropropene | CF₃CF=CHF |
| HFC-1234ze | 1,3,3,3-tetrafluoropropene | CF₃CH=CHF |
| HFC-1234yf | 2,3,3,3-tetrafluoropropene | CF₃CF=CH₂ |
| HFC-1234ye | 1,2,3,3-tetrafluoropropene | CHF₂CF=CHF |
| HFC-1243zf | 3,3,3-trifluoropropene | CF₃CH=CH₂ |
| HFC-32 | difluoromethane | CH₂F₂ |
| HFC-125 | pentafluoroethane | CF₃CHF₂ |
| HFC-134 | 1,1,2,2-tetrafluoroethane | CHF₂CHF₂ |
| HFC-134a | 1,1,1,2-tetrafluoroethane | CH₂FCF₃ |
| HFC-143a | 1,1,1-trifluoroethane | CH3CF3 |
| HFC-152a | 1,1-difluoroethane | CHF₂CH₃ |
| HFC-161 | fluoroethane | CH₃CH₂F |
| HFC-227ea | 1,1,1,2,3,3,3-heptafluoropropane | CF₃CHFCF₃ |
| HFC-236ea | 1,1,1,2,3,3-hexafluoropropane | CF₃CHFCHF₂ |
| HFC-236fa | 1,1,1,3,3,3-hexafluoroethane | CF₃CH₂CF₃ |
| HFC-245fa | 1,1,1,3,3-pentafluoropropane | CF₃CH₂CHF₂ |
| HFC-365mfc | 1,1,1,3,3-pentafluorobutane | CF₃CH₂CH₂CHF₂ |
| | propane | CH₃CH₂CH₃ |
| | n-butane | CH₃CH₂CH₂CH₃ |
| i-butane | isobutane | CH₃CH(CH₃)CH₃ |
| | 2-methylbutane | CH₃CH(CH₃)CH₂CH₃ |
| | n-pentane | CH₃CH₂CH₂CH₂CH₃ |
| | cyclopentane | cyclo-(CH₂)₅- |
| DME | dimethylether | CH₃OCH₃ |
| CO₂ | carbon dioxide | CO₂ |
| CF₃SCF₃ | bis(trifluoromethyl)sulfide | CF₃SCF₃ |
| | iodotrifluoromethane | CF₃l |

The individual components listed in Table 1 may be prepared by methods known in the art.

The fluoroolefin compounds HFC-1225ye, HFC-1234ze and HFC-1234ye may exist as different configurational isomers or stereoisomers. Unless a specific isomer is indicated, all single configurational isomers, single stereoisomers or any combination or mixture thereof are included. For instance HFC-1225ye is meant to represent the cis-isomer, transisomer, or any combination or mixture of both isomers in any ratio.

The present invention further provides compositions as listed in Table 2.

**TABLE 2**

| **Components** | **Concentration ranges (wt%)** | |
|---|---|---|
| | | **Preferred** |
| HFC-1225ye/trans-HFC-1234ze/HFC-227ea | 1-98/1-98/1-98 | 10-80/10-80/10-80 |
| trans-HFC-1234ze/HFC-1243zf/HFC-227ea | 1-98/1-98/1-98 | 10-80/10-80/10-80 |
| trans-HFC-1234ze/HFC-134/HFC-227ea | 1-98/1-98/1-98 | 10-80/10-80/10-80 |
| trans-HFC-1234ze/HFC-227ea/n-butane | 1-98/1-98/1-40 | 10-80/10-80/1-30 |

The compositions of the present invention may be azeotropic or near-azeotropic compositions. By azeotropic composition is meant a constant-boiling mixture of two or more substances that behave as a single substance. One way to characterize an azeotropic composition is that the vapor produced by partial evaporation or distillation of the liquid has the same composition as the liquid from which it is evaporated or distilled, i.e., the mixture distills/refluxes without compositional change. Constant-boiling compositions are characterized as azeotropic because they exhibit either a maximum or minimum boiling point, as compared with that of the non-azeotropic mixture of the same compounds. An azeotropic composition will not fractionate within a refrigeration or air conditioning system during operation, which may reduce efficiency of the system. Additionally, an azeotropic composition will not fractionate upon leakage from a refrigeration or air conditioning system. In the situation where one component of a mixture is flammable, fractionation during leakage could lead to a flammable composition either within the system or outside of the system.

A near-azeotropic composition (also commonly referred to as an "azeotrope-like composition") is a substantially constant boiling liquid admixture of two or more substances that behaves essentially as a single substance. One way to characterize a near-azeotropic composition is that the vapor produced by partial evaporation or distillation of the liquid has substantially the same composition as the liquid from which it was evaporated or distilled, that is, the admixture distills/refluxes without substantial composition change. Another way to characterize a near-azeotropic composition is that the bubble point vapor pressure and the dew point vapor pressure of the composition at a particular temperature are substantially the same. Herein, a composition is near-azeotropic if, after 50 weight percent of the composition is removed, such as by evaporation or boiling off, the difference in vapor pressure between the original composition and the composition remaining after 50 weight percent of the original composition has been removed is less than about 10 percent.

Ternary azeotrope compositions have been found as listed in Table 3.

**TABLE 3**

| Component A | Component B | Component C | Wt% A | Wt% B | Wt% C | Pres (psi) | Pres (kPa) | Temp (°C) |
|---|---|---|---|---|---|---|---|---|
| HFC-1225ye | trans-HFC-1234ze | HFC-227ea | 28.4 | 52.6 | 19.0 | 11.63 | 80.2 | -25 |
| trans-HFC-1234ze | HFC-1243zf | HFC-227ea | 7.1 | 73.7 | 19.2 | 13.11 | 90.4 | -25 |
| trans-HFC-1234ze | HFC-134 | HFC-227ea | 30.0 | 43.2 | 26.8 | 12.61 | 86.9 | -25 |
| trans-HFC-1234ze | HFC-227ea | n-butane | 40.1 | 48.5 | 11.3 | 12.61 | 86.9 | -25 |

Ternary near-azeotrope compositions have been identified as listed in Table 4.

**TABLE 4**

| Components | Near-azeotrope range (weight percent) | Temp (°C) |
|---|---|---|
| HFC-1225ye/trans-HFC-1234ze/HFC-227ea | 1-98/1-98/1-98 | -25 |
| trans-H FC-1234ze/HFC-1243zf/H FC-227ea | 1-98/1-98/1-98 | -25 |
| trans-H FC-1234ze/HFC-134/HFC-227ea | 1-98/1-98/1-98 | -25 |
| trans-HFC-1234ze/HFC-227ea/n-butane | 1-98/1-98/1-40 | -25 |

A non-azeotropic composition may have certain advantages over azetropic or near azeotropic mixtures. A non-azeotropic composition is a mixture of two or more substances that behaves as a mixture rather than a single substance. One way to characterize a non-azeotropic composition is that the vapor produced by partial evaporation or distillation of the liquid has a substantially different composition as the liquid from which it was evaporated or distilled, that is, the admixture distills/refluxes with substantial composition change. Another way to characterize a non-azeotropic composition is that the bubble point vapor pressure and the dew point vapor pressure of the composition at a particular temperature are substantially different. Herein, a composition is non-azeotropic if, after 50 weight percent of the composition is removed, such as by evaporation or boiling off, the difference in vapor pressure between the original composition and the composition remaining after 50 weight percent of the original composition has been removed is greater than about 10 percent.

The compositions of the present invention may be prepared by any convenient method to combine the desired amounts of the individual components. A preferred method is to weigh the desired component amounts and thereafter combine the components in an appropriate vessel. Agitation may be used, if desired.

An alternative means for making compositions of the present invention may be a method for making a refrigerant blend composition, wherein said refrigerant blend composition comprises a composition as disclosed herein, said method comprising (i) reclaiming a volume of one or more components of a refrigerant composition from at least one refrigerant container, (ii) removing impurities sufficiently to enable reuse of said one or more of the reclaimed components, (iii) and optionally, combining all or part of said reclaimed volume of components with at least one additional refrigerant composition or component.

A refrigerant container may be any container in which is stored a refrigerant blend composition that has been used in a refrigeration apparatus, air-conditioning apparatus or heat pump apparatus. Said refrigerant container may be the refrigeration apparatus, air-conditioning apparatus or heat pump apparatus in which the refrigerant blend was used. Additionally, the refrigerant container may be a storage container for collecting reclaimed refrigerant blend components, including but not limited to pressurized gas cylinders.

Residual refrigerant means any amount of refrigerant blend or refrigerant blend component that may be moved out of the refrigerant container by any method known for transferring refrigerant blends or refrigerant blend components.

Impurities may be any component that is in the refrigerant blend or refrigerant blend component due to its use in a refrigeration apparatus, air-conditioning apparatus or heat pump apparatus. Such impurities include but are not limited to refrigeration lubricants, being those described earlier herein, particulates including but not limited to metal, metal salt or elastomer particles, that may have come out of the refrigeration apparatus, air-conditioning apparatus or heat pump apparatus, and any other contaminants that may adversely effect the performance of the refrigerant blend composition.

Such impurities may be removed sufficiently to allow reuse of the refrigerant blend or refrigerant blend component without adversely effecting the performance or equipment within which the refrigerant blend or refrigerant blend component will be used.

It may be necessary to provide additional refrigerant blend or refrigerant blend component to the residual refrigerant blend or refrigerant blend component in order to produce a composition that meets the specifications required for a given product. For instance, if a refrigerant blend has 3 components in a particular weight percentage range, it may be necessary to add one or more of the components in a given amount in order to restore the composition to within the specification limits.

Compositions of the present invention have zero or low ozone depletion potential and low global warming potential (GWP). Additionally, the compositions of the present invention will have global warming potentials that are less than many hydrofluorocarbon refrigerants currently in use. One aspect of the present invention is to provide a refrigerant with a global warming potential of less than 1000, less than 500, less than 150, less than 100, or less than 50. Another aspect of the present invention is to reduce the net GWP of refrigerant mixtures by adding fluoroolefins to said mixtures.

The compositions of the present invention may be useful as low global warming potential (GWP) replacements for currently used refrigerants, including but not limited to R134a (or HFC-134a, 1,1,1,2-tetrafluoroethane), R22 (or HCFC-22, chlorodifluoromethane), R123 (or HFC-123, 2,2-dichloro-1,1,1-trifluoroethane), R11 (CFC-11, fluorotrichloromethane), R12 (CFC-12, dichlorodifluoromethane), R245fa (or HFC-245fa, 1,1,1,3,3-pentafluoropropane), R114 (or CFC-114, 1,2-dichloro-1,1,2,2-tetrafluoroethane), R236fa (or HFC-236fa, 1,1,1,3,3,3-hexafluoropropane), R124 (or HCFC-124, 2-chloro-1,1,1,2-tetrafluoroethane), R407C (ASHRAE designation for a blend of 52 weight percent R134a, 25 weight percent R125 (pentafluoroethane), and 23 weight percent R32 (difluoromethane), R410A (ASHRAE designation for a blend of 50 weight percent R125 and 50 weight percent R32), R417A, (ASHRAE designation for a blend of 46.6 weight percent R125, 50.0 weight percent R134a, and 3.4 weight percent n-butane), R422A (ASHRAE designation for a blend of 85.1 weight percent R125, 11.5 weight percent R134a, and 3.4 weight percent isobutane), R404A, (ASHRAE designation for a blend of 44 weight percent R125, 52 weight percent R143a (1,1,1-trifluoroethane), and 4.0 weight percent R134a) and R507A (ASHRAE designation for a blend of 50 weight percent R125 and 50 weight percent R143a). Additionally, the compositions of the present invention may be useful as replacements for R12 (CFC-12, dichlorodifluoromethane) or R502 (ASHRAE designation for a blend of 51.2 weight percent CFC-115 (chloropentafluoroethane) and 48.8 weight percent HCFC-22).

Often replacement refrigerants are most useful if capable of being used in the original refrigeration equipment designed for a different refrigerant. The compositions of the present invention may be useful as replacements for the above-mentioned refrigerants in original equipment. Additionally, the compositions of the present invention may be useful as replacements for the above mentioned refrigerants in equipment designed to use the above-mentioned refrigerants.

The compositions of the present invention may further comprise a lubricant.

Lubricants of the present invention comprise refrigeration lubricants, i.e. those lubricants suitable for use with refrigeration, air-conditioning, or heat pump apparatus. Among these lubricants are those conventionally used in compression refrigeration apparatus utilizing chlorofluorocarbon refrigerants. Such lubricants and their properties are discussed in the 1990 ASHRAE Handbook, Refrigeration Systems and Applications, chapter 8, titled "Lubricants in Refrigeration Systems", pages 8.1 through 8.21. Lubricants of the present invention may comprise those commonly known as "mineral oils" in the field of compression refrigeration lubrication. Mineral oils comprise paraffins (i.e. straight-chain and branched-carbon-chain, saturated hydrocarbons), naphthenes (i.e. cyclic paraffins) and aromatics (i.e. unsaturated, cyclic hydrocarbons containing one or more rings characterized by alternating double bonds). Lubricants of the present invention further comprise those commonly known as "synthetic oils" in the field of compression refrigeration lubrication. Synthetic oils comprise alkylaryls (i.e. linear and branched alkyl alkylbenzenes), synthetic paraffins and naphthenes, and poly(alphaolefins). Representative conventional lubricants of the present invention are the commercially available BVM 100 N (paraffinic mineral oil sold by BVA Oils), Suniso® 3GS and Suniso® 5GS (naphthenic mineral oil sold by Crompton Co.), Sontex® 372LT (naphthenic mineral oil sold by Pennzoil), Calumet® RO-30 (naphthenic mineral oil sold by Calumet Lubricants), Zerol® 75, Zerol® 150 and Zerol® 500 (linear alkylbenzenes sold by Shrieve Chemicals) and HAB 22 (branched alkylbenzene sold by Nippon Oil).

Lubricants of the present invention further comprise those that have been designed for use with hydrofluorocarbon refrigerants and are miscible with refrigerants of the present invention under compression refrigeration, air-conditioning, or heat pump apparatus' operating conditions. Such lubricants and their properties are discussed in "Synthetic Lubricants and High-Performance Fluids", R. L. Shubkin, editor, Marcel Dekker, 1993. Such lubricants include, but are not limited to, polyol esters (POEs) such as Castrol® 100 (Castrol, United Kingdom), polyalkylene glycols (PAGs) such as RL-488A from Dow (Dow Chemical, Midland, Michigan), and polyvinyl ethers (PVEs). These lubricants are readily available from various commercial sources.

Lubricants of the present invention are selected by considering a given compressor's requirements and the environment to which the lubricant will be exposed. Lubricants of the present invention preferably have a kinematic viscosity of at least about 5 cs (centistokes) at 40°C.

Commonly used refrigeration system additives may optionally be added, as desired, to compositions of the present invention in order to enhance lubricity and system stability. These additives are generally known within the field of refrigeration compressor lubrication, and include anti wear agents, extreme pressure lubricants, corrosion and oxidation inhibitors, metal surface deactivators, free radical scavengers, foaming and antifoam control agents, leak detectants and the like. In general, these additives are present only in small amounts relative to the overall lubricant composition. They are typically used at concentrations of from less than about 0.1 % to as much as about 3 % of each additive. These additives are selected on the basis of the individual system requirements. Some typical examples of such additives may include, but are not limited to, lubrication enhancing additives, such as alkyl or aryl esters of phosphoric acid and of thiophosphates. Additionally, the metal dialkyl dithiophosphates (e.g. zinc dialkyl dithiophosphate or ZDDP, Lubrizol 1375) and other members of this family of chemicals may be used in compositions of the present invention. Other antiwear additives include natural product oils and asymmetrical polyhydroxyl lubrication additives such as Synergol TMS (International Lubricants). Similarly, stabilizers such as anti oxidants, free radical scavengers, and water scavengers may be employed. Compounds in this category can include, but are not limited to, butylated hydroxy toluene (BHT) and epoxides.

The compositions of the present invention may further comprise about 0.01 weight percent to about 5 weight percent of an additive such as, for example, a stabilizer, free radical scavenger and/or antioxidant. Such additives include but are not limited to, nitromethane, hindered phenols, hydroxylamines, thiols, phosphites, or lactones. Single additives or combinations may be used.

The compositions of the present invention may further comprise about 0.01 weight percent to about 5 weight percent of a water scavenger (drying compound). Such water scavengers may comprise ortho esters such as trimethyl-, triethyl-, or tripropylortho formate.

The compositions of the present invention may further comprise a tracer selected from the group consisting of hydrofluorocarbons (HFCs), deuterated hydrocarbons, deuterated hydrofluorocarbons, perfluorocarbons, fluoroethers, brominated compounds, iodated compounds, alcohols, aldehydes, ketones, nitrous oxide (N₂O) and combinations thereof. The tracer compounds are added to the compositions in previously determined quantities to allow detection of any dilution, contamination or other alteration of the composition, as described in U. S. Patent application serial no. 11/062044, filed February 18, 2005.

Typical tracer compounds for use in the present compositions are listed in Table 5.

**TABLE 5**

| **Compound** | **Structure** |
|---|---|
| **Deuterated hydrocarbons and hydrofluorocarbons** | |
| Ethane-d6 | CD₃CD₃ |
| Propane-d8 | CD₃CD₂CD₃ |
| HFC-32-d2 | CD₂F₂ |
| HFC-134a-d2 | CD₂FCF₃ |
| HFC-143a-d3 | CD₃CF₃ |
| HFC-125-d | CDF₂CF₃ |
| HFC-227ea-d | CF₃CDFCF₃ |
| HFC-227ca-d | CF₃CF₂CDF₂ |
| HFC-134-d2 | CDF₂CDF₂ |
| HFC-236fa-d2 | CF₃CD₂CF₃ |
| HFC-245cb-d3 | CF₃CF₂CD₃ |
| HFC-263fb-d2* | CF₃CD₂CH₃ |
| HFC-263fb-d3 | CF₂CH₂CD₃ |

| **Fluoroethers** | |
|---|---|
| HFOC-125E | CHF₂OCF₃ |
| HFOC-134aE | CH₂FOCF₃ |
| HFOC-143aE | CH₃OCF₃ |
| HFOC-227eaE | CF₃OCHFCF₃ |
| HFOC-236faE | CF₃OCH₂CF₃ |
| HFOC-245faEβγ or HFOC-245faEαβ | CHF₂OCH₂CF₃ |
| | (or CHF₂CH₂OCF₃) |
| HFOC-245cbEβγ or HFOC-245cbαβ | CH₃OCF₂CF₃ |
| | (or CH₃CF₂OCF₃) |
| HFE-42-11 mcc (or Freon® E1) | CF₃CF₂CF₂OCHFCF₃ |
| Freon® E2 | CF₃CF₂CF₂OCF(CF₃)CF₂OCHFCF₃ |

| **Hydrofluorocarbons** | |
|---|---|
| HFC-23 | CHF₃ |
| HFC-161 | CH₃CH₂F |
| HFC-152a | CH₃CHF₂ |
| HFC-134 | CHF₂CHF₂ |
| HFC-227ea | CF₃CHFCF₃ |
| HFC-227ca | CHF₂CF₂CF₃ |
| HFC-236cb | CH₂FCF₂CF₃ |
| HFC-236ea | CF₃CHFCHF₂ |
| HFC-236fa | CF₃CH₂CF₃ |
| HFC-245cb | CF₃CF₂CH₃ |
| HFC-245fa | CHF₂CH₂CF₃ |
| HFC-254cb | CHF₂CF₂CH₃ |
| HFC-254eb | CF₃CHFCH₃ |
| HFC-263fb | CF₃CH₂CH₃ |
| HFC-272ca | CH₃CF₂CH₃ |
| HFC-281 ea | CH₃CHFCH₃ |
| HFC-281 fa | CH₂FCH₂CH₃ |
| HFC-329p | CHF₂CF₂CF₂CF₃ |
| HFC-329mmz | (CH₃)₂CHCF₃ |
| HFC-338mf | CF₃CH₂CF₂CF₃ |
| HFC-338pcc | CHF₂CF₂CF₂CHF₂ |
| HFC-347s | CH₃CF₂CF₂CF₃ |
| HFC-43-10mee | CF₃CHFCHFCF₂CF₃ |

| **Perfluorocarbons** | |
|---|---|
| PFC-116 | CF₃CF₃ |
| PFC-C216 | Cyclo(-CF₂CF₂CF₂-) |
| PFC-218 | CF₃CF₂CF₃ |
| PFC-C318 | Cyclo(-CF₂CF₂CF₂CF₂-) |
| PFC-31-10mc | CF₃CF₂CF₂CF₃ |
| PFC-31-10my | (CF₃)₂CFCF₃ |
| PFC-C51-12mycm | Cyclo(-CF(CF₃)CF₂CF(CF₃)CF₂-) |
| PFC-C51-12mym, trans | Cyclo(-CF₂CF(CF₃)CF(CF₃CF₂-) |
| PFC-C51-12mym, cis | Cyclo(-CF₂CF(CF₃)CF(CF₃)CF₂-) |
| Perfluoromethylcyclo-pentane | Cyclo(-CF₂CF₂(CF₃)CF₂CF₂CF₂-) |
| Perfluoromethylcyclo-hexane | Cyclo(-CF₂CF₂(CF₃)CF₂CF₂CF₂CF₂-) |
| Perfluorodimethylcyclo-hexane (ortho, meta, or para) | Cyclo(-CF₂CF₂(CF₃)CF₂CF₂(CF₃)CF₂-) |
| Perfluoroethylcyclohexane | Cyclo(-CF₂CF₂(CF₂CF₃)CF₂CF₂CF₂CF₂-) |
| Perfluoroindan | C₉F₁₀ (see structure below) |
| 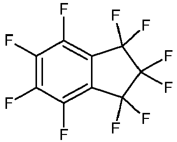 | |
| Perfluorotrimethylcyclo-hexane (all possible isomers) | Cyclo(-CF₂(CF₃)CF₂(CF₃)CF₂CF₂(CF₃)CF₂-) |
| Perfluoroisopropylcyclo-hexane | Cyclo(-CF₂CF₂(CF₂(CF₃)₂)CF₂CF₂CF₂CF₂-) |
| Perfluorodecalin (cis or trans, trans shown) | C₁₀F₁₈ (see structure below) |
| 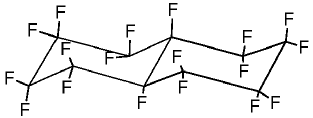 | |
| Perfluoromethyldecalin (cis or trans and all additional possible isomers) | C₁₁F₂₀ (see structure below) |
| | 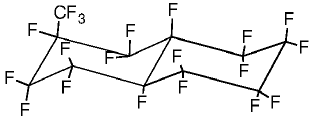 |

| **Brominated compounds** | |
|---|---|
| Bromomethane | CH₃Br |
| Bromofluoromethane | CH₂FBr |
| Bromodifluoromethane | CHF₂Br |
| Dibromofluoromethane | CHFBr₂ |
| Tribromomethane | CHBr₃ |
| Bromoethane | CH₃CH₂Br |
| Bromoethene | CH₂=CHBr |
| 1,2-dibromoethane | CH₂BrCH₂Br |
| 1-bromo-1,2-difluoroethene | CFBr=CHF |

| **lodated compounds** | |
|---|---|
| lodotrifluoromethane | CF₃I |
| Difluoroiodomethane | CHF₂I |
| Fluoroiodomethane | CH₂FI |
| 1,1,2-trifluoro-1-iodoethane | CF₂ICH₂F |
| 1,1,2,2-tetrafluoro-1-iodoethane | CF₂ICHF₂ |
| 1,1,2,2-tetrafluoro-1,2-diiodoethane | CF₂ICF₂I |
| lodopentafluorobenzene | C₆F₅I |

| **Alcohols** | |
|---|---|
| Ethanol | CH₃CH₂OH |
| n-propanol | CH₃CH₂CH₂OH |
| Isopropanol | CH₃CH(OH)CH₃ |

| **Aldehydes and Ketones** | |
|---|---|
| Acetone (2-propanone) | CH₃C(O)CH₃ |
| n-propanal | CH₃CH₂CHO |
| n-butanal | CH₃CH₂CH₂CHO |
| Methyl ethyl ketone (2-butanone) | CH₃C(O)CH₂CH₃ |

| **Other** | |
|---|---|
| Nitrous oxide | N₂O |

The compounds listed in Table 5 are available commercially (from chemical supply houses) or may be prepared by processes known in the art.

Single tracer compounds may be used in combination with a refrigeration/heating fluid in the compositions of the present invention or multiple tracer compounds may be combined in any proportion to serve as a tracer blend. The tracer blend may contain multiple tracer compounds from the same class of compounds or multiple tracer compounds from different classes of compounds. For example, a tracer blend may contain 2 or more deuterated hydrofluorocarbons, or one deuterated hydrofluorocarbon in combination with one or more perfluorocarbons.

Additionally, some of the compounds in Table 5 exist as multiple isomers, structural or optical. Single isomers or multiple isomers of the same compound may be used in any proportion to prepare the tracer compound. Further, single or multiple isomers of a given compound may be combined in any proportion with any number of other compounds to serve as a tracer blend.

The tracer compound or tracer blend may be present in the compositions at a total concentration of about 50 parts per million by weight (ppm) to about 1000 ppm. Preferably, the tracer compound or tracer blend is present at a total concentration of about 50 ppm to about 500 ppm and most preferably, the tracer compound or tracer blend is present at a total concentration of about 100 ppm to about 300 ppm.

The compositions of the present invention may further comprise a compatibilizer selected from the group consisting of polyoxyalkylene glycol ethers, amides, nitriles, ketones, chlorocarbons, esters, lactones, aryl ethers, fluoroethers and 1,1,1-trifluoroalkanes. The compatibilizer is used to improve solubility of hydrofluorocarbon refrigerants in conventional refrigeration lubricants. Refrigeration lubricants are needed to lubricate the compressor of a refrigeration, air-conditioning or heat pump apparatus. The lubricant must move throughout the apparatus with the refrigerant in particular it must return from the non-compressor zones to the compressor to continue to function as lubricant and avoid compressor failure.

Hydrofluorocarbon refrigerants are generally not compatible with conventional refrigeration lubricants such as mineral oils, alkylbenzenes, synthetic paraffins, synthetic naphthenes and poly(alpha)olefins. Many replacement lubricants have been proposed, however, the polyalkylene glycols, polyol esters and polyvinyl ethers, suggested for use with hydrofluorocarbon refrigerants are expensive and absorb water readily. Water in a refrigeration, air-conditioning system or heat pump can lead to corrosion and the formation of particles that may plug the capillary tubes and other small orifices in the system, ultimately causing system failure. Additionally, in existing equipment, time-consuming and costly flushing procedures are required to change to a new lubricant. Therefore, it is desirable to continue to use the original lubricant if possible.

The compatibilizers may improve solubility of the hydrofluorocarbon refrigerants in conventional refrigeration lubricants and thus improve oil return to the compressor.

Polyoxyalkylene glycol ether compatibilizers may be represented by the formula R¹[(OR²)ₓOR³]_{y}, wherein: x is an integer from 1-3; y is an integer from 1-4; R¹ is selected from hydrogen and aliphatic hydrocarbon radicals having 1 to 6 carbon atoms and y bonding sites; R² is selected from aliphatic hydrocarbylene radicals having from 2 to 4 carbon atoms; R³ is selected from hydrogen and aliphatic and alicyclic hydrocarbon radicals having from 1 to 6 carbon atoms; at least one of R¹ and R³ is said hydrocarbon radical; and wherein said polyoxyalkylene glycol ethers have a molecular weight of from about 100 to about 300 atomic mass units. As used herein, bonding sites mean radical sites available to form covalent bonds with other radicals. Hydrocarbylene radicals mean divalent hydrocarbon radicals. Preferred polyoxyalkylene glycol ether compatibilizers are represented by R¹[(OR²)ₓOR³]_{y}: x is preferably 1-2; y is preferably 1; R¹ and R³ are preferably independently selected from hydrogen and aliphatic hydrocarbon radicals having 1 to 4 carbon atoms; R² is preferably selected from aliphatic hydrocarbylene radicals having from 2 or 3 carbon atoms, most preferably 3 carbon atoms; the polyoxyalkylene glycol ether molecular weight is preferably from about 100 to about 250 atomic mass units, most preferably from about 125 to about 250 atomic mass units. The R¹ and R³ hydrocarbon radicals having 1 to 6 carbon atoms may be linear, branched or cyclic. Representative R¹ and R³ hydrocarbon radicals include methyl, ethyl, propyl, isopropyl, butyl, isobutyl, sec-butyl, tert-butyl, pentyl, isopentyl, neopentyl, *tert-pentyl,* cyclopentyl, and cyclohexyl. Where free hydroxyl radicals on the present polyoxyalkylene glycol ether compatibilizers may be incompatible with certain compression refrigeration apparatus materials of construction (e.g. Mylar®), R¹ and R³ are preferably aliphatic hydrocarbon radicals having 1 to 4 carbon atoms, most preferably 1 carbon atom. The R² aliphatic hydrocarbylene radicals having from 2 to 4 carbon atoms form repeating oxyalkylene radicals - (OR²)ₓ - that include oxyethylene radicals, oxypropylene radicals, and oxybutylene radicals. The oxyalkylene radical comprising R² in one polyoxyalkylene glycol ether compatibilizer molecule may be the same, or one molecule may contain different R² oxyalkylene groups. The present polyoxyalkylene glycol ether compatibilizers preferably comprise at least one oxypropylene radical. Where R¹ is an aliphatic or alicyclic hydrocarbon radical having 1 to 6 carbon atoms and y bonding sites, the radical may be linear, branched or cyclic. Representative R¹ aliphatic hydrocarbon radicals having two bonding sites include, for example, an ethylene radical, a propylene radical, a butylene radical, a pentylene radical, a hexylene radical, a cyclopentylene radical and a cyclohexylene radical. Representative R¹ aliphatic hydrocarbon radicals having three or four bonding sites include residues derived from polyalcohols, such as trimethylolpropane, glycerin, pentaerythritol, 1,2,3-trihydroxycyclohexane and 1,3,5-trihydroxycyclohexane, by removing their hydroxyl radicals.

Representative polyoxyalkylene glycol ether compatibilizers include but are not limited to: CH₃OCH₂CH(CH₃)O(H or CH₃) (propylene glycol methyl (or dimethyl) ether), CH₃O[CH₂CH(CH₃)O]₂(H or CH₃) (dipropylene glycol methyl (or dimethyl) ether), CH₃O[CH₂CH(CH₃)O]₃(H or CH₃) (tripropylene glycol methyl (or dimethyl) ether), C₂H₅OCH₂CH(CH₃)O(H or C₂H₅) (propylene glycol ethyl (or diethyl) ether), C₂H₅O[CH₂CH(CH₃)O]₂(H or C₂H₅) (dipropylene glycol ethyl (or diethyl) ether), C₂H₅O[CH₂CH(CH₃)O]₃(H or C₂H₅) (tripropylene glycol ethyl (or diethyl) ether), C₃H₇OCH₂CH(CH₃)O(H or C₃H₇) (propylene glycol n-propyl (or din-propyl) ether), C₃H₇O[CH₂CH(CH₃)O]₂(H or C₃H₇) (dipropylene glycol n-propyl (or di-n-propyl) ether), C₃H₇O[CH₂CH(CH₃)O]₃(H or C₃H₇) (tripropylene glycol n-propyl (or di-n-propyl) ether), C₄H₉OCH₂CH(CH₃)OH (propylene glycol n-butyl ether), C₄H₉O[CH₂CH(CHs)O]₂(H or C₄H₉) (dipropylene glycol n-butyl (or di-n-butyl) ether), C₄H₉O[CH₂CH(CH₃)O]₃(H or C₄H₉) (tripropylene glycol n-butyl (or di-n-butyl) ether), (CH₃)₃COCH₂CH(CH₃)OH (propylene glycol t-butyl ether), (CH₃)₃CO[CH₂CH(CH₃)O]₂(H or (CH₃)₃) (dipropylene glycol t-butyl (or di-t-butyl) ether), (CH₃)₃CO[CH₂CH(CH₃)O]₃(H or (CH₃)₃) (tripropylene glycol t-butyl (or di-t-butyl) ether), C₅H₁₁OCH₂CH(CH₃)OH (propylene glycol n-pentyl ether), C₄H₉OCH₂CH(C₂H₅)OH (butylene glycol n-butyl ether), C₄H₉O[CH₂CH(C₂H₅)O]₂H (dibutylene glycol n-butyl ether), trimethylolpropane tri-n-butyl ether (C₂H₅C(CH₂O(CH₂)₃CH₃)₃) and trimethylolpropane di-n-butyl ether (C₂H₅C(CH₂OC(CH₂)₃CH₃)₂CH₂OH).

Amide compatibilizers may comprise those represented by the formulae R¹C(O)NR²R³ and cyclo-[R⁴C(O)N(R⁵)], wherein R¹, R², R³ and R⁵ are independently selected from aliphatic and alicyclic hydrocarbon radicals having from 1 to 12 carbon atoms; R⁴ is selected from aliphatic hydrocarbylene radicals having from 3 to 12 carbon atoms; and wherein said amides have a molecular weight of from about 100 to about 300 atomic mass units. The molecular weight of said amides is preferably from about 160 to about 250 atomic mass units. R¹, R², R³ and R⁵ may optionally include substituted hydrocarbon radicals, that is, radicals containing non-hydrocarbon substituents selected from halogens (e.g., fluorine, chlorine) and alkoxides (e.g. methoxy). R¹, R², R³ and R⁵ may optionally include heteroatom-substituted hydrocarbon radicals, that is, radicals, which contain the atoms nitrogen (aza-), oxygen (oxa-) or sulfur (thia-) in a radical chain otherwise composed of carbon atoms. In general, no more than three non-hydrocarbon substituents and heteroatoms, and preferably no more than one, will be present for each 10 carbon atoms in R¹⁻³, and the presence of any such non-hydrocarbon substituents and heteroatoms must be considered in applying the aforementioned molecular weight limitations. Preferred amide compatibilizers consist of carbon, hydrogen, nitrogen and oxygen. Representative R¹, R², R³ and R⁵ aliphatic and alicyclic hydrocarbon radicals include methyl, ethyl, propyl, isopropyl, butyl, isobutyl, *sec*-butyl, *tert*-butyl, pentyl, isopentyl, neopentyl, *tert-*pentyl, cyclopentyl, cyclohexyl, heptyl, octyl, nonyl, decyl, undecyl, dodecyl and their configurational isomers. A preferred embodiment of amide compatibilizers are those wherein R⁴ in the aforementioned formula cyclo-[R⁴C(O)N(R⁵)-] may be represented by the hydrocarbylene radical (CR⁶R⁷)ₙ, in other words, the formula: cyclo-[(CR⁶R⁷)ₙC(O)N(R⁵)-] wherein: the previously-stated values for molecular weight apply; n is an integer from 3 to 5; R⁵ is a saturated hydrocarbon radical containing 1 to 12 carbon atoms; R⁶ and R⁷ are independently selected (for each n) by the rules previously offered defining R¹⁻³. In the lactams represented by the formula: cyclo-[(CR⁶R⁷)ₙC(O)N(R⁵)-], all R⁶ and R⁷ are preferably hydrogen, or contain a single saturated hydrocarbon radical among the n methylene units, and R⁵ is a saturated hydrocarbon radical containing 3 to 12 carbon atoms. For example, 1-(saturated hydrocarbon radical)-5-methylpyrrolidin-2-ones.

Representative amide compatibilizers include but are not limited to: 1-octylpyrrolidin-2-one, 1-decylpyrrolidin-2-one, 1-octyl-5-methylpyrrolidin-2-one, 1-butylcaprolactam, 1-cyclohexylpyrrolidin-2-one, 1-butyl-5-methylpiperid-2-one, 1-pentyl-5-methylpiperid-2-one, 1-hexylcaprolactam, 1-hexyl-5-methylpyrrolidin-2-one, 5-methyl-1 -pentylpiperid-2-one, 1,3-dimethylpiperid-2-one, 1-methylcaprolactam, 1-butyl-pyrrolidin-2-one, 1,5-dimethylpiperid-2-one, 1-decyl-5-methylpyrrolidin-2-one, 1-dodecylpyrrolid-2-one, N,N-dibutylformamide and N,N-diisopropylacetamide.

Ketone compatibilizers may comprise ketones represented by the formula R¹C(O)R², wherein R¹ and R² are independently selected from aliphatic, alicyclic and aryl hydrocarbon radicals having from 1 to 12 carbon atoms, and wherein said ketones have a molecular weight of from about 70 to about 300 atomic mass units. R¹ and R² in said ketones are preferably independently selected from aliphatic and alicyclic hydrocarbon radicals having 1 to 9 carbon atoms. The molecular weight of said ketones is preferably from about 100 to 200 atomic mass units. R¹ and R² may together form a hydrocarbylene radical connected and forming a five, six, or seven-membered ring cyclic ketone, for example, cyclopentanone, cyclohexanone, and cycloheptanone. R¹ and R² may optionally include substituted hydrocarbon radicals, that is, radicals containing non-hydrocarbon substituents selected from halogens (e.g., fluorine, chlorine) and alkoxides (e.g. methoxy). R¹ and R² may optionally include heteroatom-substituted hydrocarbon radicals, that is, radicals, which contain the atoms nitrogen (aza-), oxygen (keto-, oxa-) or sulfur (thia-) in a radical chain otherwise composed of carbon atoms. In general, no more than three non-hydrocarbon substituents and heteroatoms, and preferably no more than one, will be present for each 10 carbon atoms in R¹ and R², and the presence of any such non-hydrocarbon substituents and heteroatoms must be considered in applying the aforementioned molecular weight limitations. Representative R¹ and R² aliphatic, alicyclic and aryl hydrocarbon radicals in the general formula R¹C(O)R² include methyl, ethyl, propyl, isopropyl, butyl, isobutyl, *sec*-butyl, *tert*-butyl, pentyl, isopentyl, neopentyl, *tert*-pentyl, cyclopentyl, cyclohexyl, heptyl, octyl, nonyl, decyl, undecyl, dodecyl and their configurational isomers, as well as phenyl, benzyl, cumenyl, mesityl, tolyl, xylyl and phenethyl.

Representative ketone compatibilizers include but are not limited to: 2-butanone, 2-pentanone, acetophenone, butyrophenone, hexanophenone, cyclohexanone, cycloheptanone, 2-heptanone, 3-heptanone, 5-methyl-2-hexanone, 2-octanone, 3-octanone, diisobutyl ketone, 4-ethylcyclohexanone, 2-nonanone, 5-nonanone, 2-decanone, 4-decanone, 2-decalone, 2-tridecanone, dihexyl ketone and dicyclohexyl ketone.

Nitrile compatibilizers may comprise nitriles represented by the formula R¹CN, wherein R¹ is selected from aliphatic, alicyclic or aryl hydrocarbon radicals having from 5 to 12 carbon atoms, and wherein said nitriles have a molecular weight of from about 90 to about 200 atomic mass units. R¹ in said nitrile compatibilizers is preferably selected from aliphatic and alicyclic hydrocarbon radicals having 8 to 10 carbon atoms. The molecular weight of said nitrile compatibilizers is preferably from about 120 to about 140 atomic mass units. R¹ may optionally include substituted hydrocarbon radicals, that is, radicals containing non-hydrocarbon substituents selected from halogens (e.g., fluorine, chlorine) and alkoxides (e.g. methoxy). R¹ may optionally include heteroatom-substituted hydrocarbon radicals, that is, radicals, which contain the atoms nitrogen (aza-), oxygen (keto-, oxa-) or sulfur (thia-) in a radical chain otherwise composed of carbon atoms. In general, no more than three non-hydrocarbon substituents and heteroatoms, and preferably no more than one, will be present for each 10 carbon atoms in R¹, and the presence of any such non-hydrocarbon substituents and heteroatoms must be considered in applying the aforementioned molecular weight limitations. Representative R¹ aliphatic, alicyclic and aryl hydrocarbon radicals in the general formula R¹CN include pentyl, isopentyl, neopentyl, *tert*-pentyl, cyclopentyl, cyclohexyl, heptyl, octyl, nonyl, decyl, undecyl, dodecyl and their configurational isomers, as well as phenyl, benzyl, cumenyl, mesityl, tolyl, xylyl and phenethyl.

Representative nitrile compatibilizers include but are not limited to: 1-cyanopentane, 2,2-dimethyl-4-cyanopentane, 1-cyanohexane, 1-cyanoheptane, 1-cyanooctane, 2-cyanooctane, 1-cyanononane, 1-cyanodecane, 2-cyanodecane, 1-cyanoundecane and 1-cyanododecane.

Chlorocarbon compatibilizers may comprise chlorocarbons represented by the formula RClₓ, wherein; x is selected from the integers 1 or 2; R is selected from aliphatic and alicyclic hydrocarbon radicals having 1 to 12 carbon atoms; and wherein said chlorocarbons have a molecular weight of from about 100 to about 200 atomic mass units. The molecular weight of said chlorocarbon compatibilizers is preferably from about 120 to 150 atomic mass units. Representative R aliphatic and alicyclic hydrocarbon radicals in the general formula RClₓ include methyl, ethyl, propyl, isopropyl, butyl, isobutyl, *sec*-butyl, *tert*-butyl, pentyl, isopentyl, neopentyl, *tert*-pentyl, cyclopentyl, cyclohexyl, heptyl, octyl, nonyl, decyl, undecyl, dodecyl and their configurational isomers.

Representative chlorocarbon compatibilizers include but are not limited to: 3-(chloromethyl)pentane, 3-chloro-3-methylpentane, 1-chlorohexane, 1,6-dichlorohexane, 1-chloroheptane, 1-chlorooctane, 1-chlorononane, 1-chlorodecane, and 1,1,1-trichlorodecane. Ester compatibilizers may comprise esters represented by the general formula R¹CO₂R², wherein R¹ and R²are independently selected from linear and cyclic, saturated and unsaturated, alkyl and aryl radicals. Preferred esters consist essentially of the elements C, H and O, have a molecular weight of from about 80 to about 550 atomic mass units.

Representative esters include but are not limited to: (CH₃)₂CHCH₂OOC(CH₂)₂-₄OCOCH₂CH(CH₃)₂ (diisobutyl dibasic ester), ethyl hexanoate, ethyl heptanoate, n-butyl propionate, n-propyl propionate, ethyl benzoate, di-n-propyl phthalate, benzoic acid ethoxyethyl ester, dipropyl carbonate, "Exxate 700" (a commercial C₇ alkyl acetate), "Exxate 800" (a commercial C₈ alkyl acetate), dibutyl phthalate, and tert-butyl acetate.

Lactone compatibilizers may comprise lactones represented by structures [A], [B], and [C]:

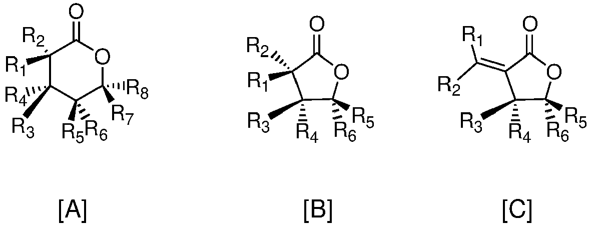

These lactones contain the functional group -CO₂- in a ring of six (A), or preferably five atoms (B), wherein for structures [A] and [B], R¹ through R₈ are independently selected from hydrogen or linear, branched, cyclic, bicyclic, saturated and unsaturated hydrocarbyl radicals. Each R¹ though R₈ may be connected forming a ring with another R¹ through R₈. The lactone may have an exocyclic alkylidene group as in structure [C], wherein R₁ through R₆ are independently selected from hydrogen or linear, branched, cyclic, bicyclic, saturated and unsaturated hydrocarbyl radicals. Each R₁ though R₆ may be connected forming a ring with another R₁ through R₆. The lactone compatibilizers have a molecular weight range of from about 80 to about 300 atomic mass units, preferred from about 80 to about 200 atomic mass units.

Representative lactone compatibilizers include but are not limited to the compounds listed in Table 6.

**TABLE 6**

| **Additive** | **Molecular Structure** | **Molecular Formula** | **Molecular Weight (amu)** |
|---|---|---|---|
| (E,Z)-3-ethylidene-5-methyl-dihydro-furan-2-one | 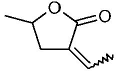 | C₇H₁₀O₂ | 126 |
| (E,Z)-3-propylidene-5-methyl-dihydro-furan-2-one | 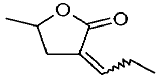 | C₈H₁₂O₂ | 140 |
| (E,Z)-3-butylidene-5-methyl-dihydro-furan-2-one | 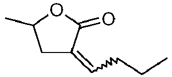 | C₉H₁₄O₂ | 154 |
| (E,Z)-3-pentylidene-5-methyl-dihydro-furan-2-one | 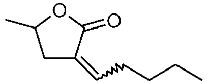 | C₁₀H₁₆O₂ | 168 |
| (E,Z)-3-Hexylidene-5-methyl-dihydro-furan-2-one | 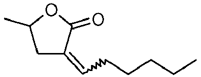 | C₁₁H₁₈O₂ | 182 |
| (E,Z)-3-Heptylidene-5-methyl-dihydro-furan-2-one | 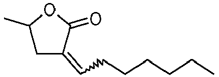 | C₁₂H₂₀O₂ | 196 |
| (E,Z)-3-octylidene-5-methyl-dihydro-furan-2-one | 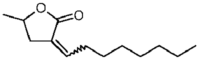 | C₁₃H₂₂O₂ | 210 |
| (E,Z)-3-nonylidene-5-methyl-dihydro-furan-2-one | 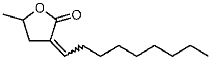 | C₁₄H₂₄O₂ | 224 |
| (E,Z)-3-decylidene-5-methyl-dihydro-furan-2-one | 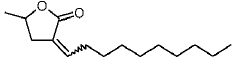 | C₁₅H₂₆O₂ | 238 |
| (E,Z)-3-(3,5,5-trimethylhexylidene)-5-methyl-dihydrofuran-2-one | 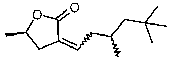 | C₁₄H₂₄O₂ | 224 |
| (E,Z)-3-cyclohexylmethylidene-5-methyl-dihydrofuran-2-one | 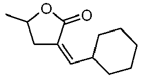 | C₁₂H₁₈O₂ | 194 |
| *gamma*-octalactone | 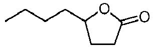 | C₈H₁₄O₂ | 142 |
| *gamma*-nonalactone | 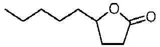 | C₉H₁₆O₂ | 156 |
| *gamma*-decalactone | 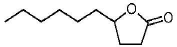 | C₁₀H₁₈O₂ | 170 |
| *gamma*-undecalactone | 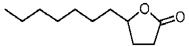 | C₁₁ H₂₀O₂ | 184 |
| *gamma*-dodecalactone | 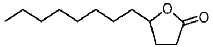 | C₁₂H₂₂O₂ | 198 |
| 3-hexyldihydro-furan-2-one | 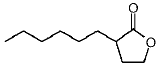 | C₁₀H₁₈O₂ | 170 |
| 3-heptyldihydro-furan-2-one | 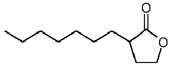 | C₁₁ H₂₀O₂ | 184 |
| *cis*-3-ethyl-5-methyl-dihydro-furan-2-one | 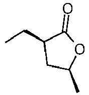 | C₇H₁₂O₂ | 128 |
| *cis*-(3-propyl-5-methyl)-dihydro-furan-2-one | 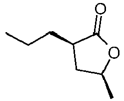 | C₈H₁₄O₂ | 142 |
| *cis*-(3-butyl-5-methyl)-dihydro-furan-2-one | 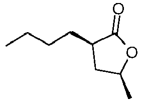 | C₉H₁₆O₂ | 156 |
| *cis*-(3-pentyl-5-methyl)-dihydro-furan-2-one | 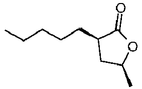 | C₁₀H₁₈O₂ | 170 |
| *cis*-3-hexyl-5-methyl-dihydro-furan-2-one | 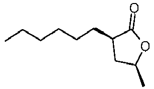 | C₁₁H₂₀O₂ | 184 |
| *cis*-3-heptyl-5-methyl-dihydro-furan-2-one | 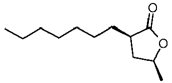 | C₁₂H₂₂O₂ | 198 |
| *cis*-3-octyl-5-methyl-dihydro-furan-2-one | 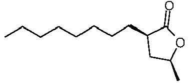 | C₁₃H₂₄O₂ | 212 |
| *cis*-3-(3,5,5-trimethylhexyl)-5-methyl-dihydro-furan-2-one | 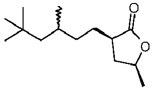 | C₁₄H₂₆O₂ | 226 |
| *cis*-3-cyclohexylmethyl-5-methyl-dihydro-furan-2-one | 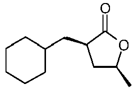 | C₁₂H₂₀O₂ | 196 |
| 5-methyl-5-hexyl-dihydro-furan-2-one | 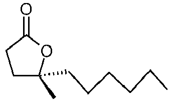 | C₁₁H₂₀O₂ | 184 |
| 5-methyl-5-octyl-dihydro-furan-2-one | 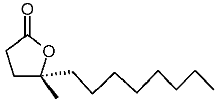 | C₁₃H₂₄O₂ | 212 |
| Hexahydro-isobenzofuran-1-one | 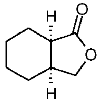 | C₈H₁₂O₂ | 140 |
| *delta*-decalactone | 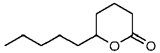 | C₁₀H₁₈O₂ | 170 |
| *delta*-undecalactone | 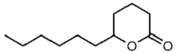 | C₁₁ H₂₀O₂ | 184 |
| *delta*-dodecalactone | 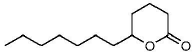 | C₁₂H₂₂O₂ | 198 |
| mixture of 4-hexyl-dihydrofuran-2-one and 3-hexyl-dihydro-furan-2-one | 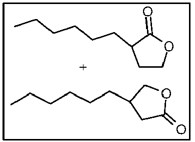 | C₁₀H₁₈O₂ | 170 |

Lactone compatibilizers generally have a kinematic viscosity of less than about 7 centistokes at 40°C. For instance, gamma-undecalactone has kinematic viscosity of 5.4 centistokes and cis-(3-hexyl-5-methyl)dihydrofuran-2-one has viscosity of 4.5 centistokes both at 40°C. Lactone compatibilizers may be available commercially or prepared by methods as described in U. S. patent application 10/910,495 filed August 3, 2004.

Aryl ether compatibilizers may further comprise aryl ethers represented by the formula R¹OR², wherein: R¹ is selected from aryl hydrocarbon radicals having from 6 to 12 carbon atoms; R² is selected from aliphatic hydrocarbon radicals having from 1 to 4 carbon atoms; and wherein said aryl ethers have a molecular weight of from about 100 to about 150 atomic mass units. Representative R¹ aryl radicals in the general formula R¹OR² include phenyl, biphenyl, cumenyl, mesityl, tolyl, xylyl, naphthyl and pyridyl. Representative R² aliphatic hydrocarbon radicals in the general formula R¹OR² include methyl, ethyl, propyl, isopropyl, butyl, isobutyl, sec-butyl and *tert*-butyl. Representative aromatic ether compatibilizers include but are not limited to: methyl phenyl ether (anisole), 1,3-dimethyoxybenzene, ethyl phenyl ether and butyl phenyl ether.

Fluoroether compatibilizers may comprise those represented by the general formula R¹OCF₂CF₂H, wherein R¹ is selected from aliphatic, alicyclic, and aromatic hydrocarbon radicals having from about 5 to about 15 carbon atoms, preferably primary, linear, saturated, alkyl radicals. Representative fluoroether compatibilizers include but are not limited to: C₈H₁₇OCF₂CF₂H and C₆H₁₃OCF₂CF₂H. It should be noted that if the refrigerant is a fluoroether, then the compatibilizer may not be the same fluoroether.

Fluoroether compatibilizers may further comprise ethers derived from fluoroolefins and polyols. The fluoroolefins may be of the type CF₂=CXY, wherein X is hydrogen, chlorine or fluorine, and Y is chlorine, fluorine, CF3 or ORf, wherein Rf is CF3, C2F5, or C3F7. Representative fluoroolefins are tetrafluoroethylene, chlorotrifluoroethylene, hexafluoropropylene, and perfluoromethylvinyl ether. The polyols may be linear or branched. Linear polyols may be of the type HOCH₂(CHOH)ₓ(CRR')_{y}CH₂OH, wherein R and R' are hydrogen, or CH₃, or C₂H₅ and wherein x is an integer from 0-4, and y is an integer from 0-4. Branched polyols may be of the type C(OH)ₜ(R)ᵤ(CH₂OH)ᵥ[(CH₂)ₘCH₂OH]_{w}, wherein R may be hydrogen, CH₃ or C₂H₅, m may be an integer from 0 to 3, t and u may be 0 or 1, v and w are integers from 0 to 4, and also wherein t + u + v + w = 4. Representative polyols are trimethylol propane, pentaerythritol, butanediol, and ethylene glycol.

1,1,1-Trifluoroalkane compatibilizers may comprise 1,1,1-trifluoroalkanes represented by the general formula CF₃R¹, wherein R¹ is selected from aliphatic and alicyclic hydrocarbon radicals having from about 5 to about 15 carbon atoms, preferably primary, linear, saturated, alkyl radicals. Representative 1,1,1-trifluoroalkane compatibilizers include but are not limited to: 1,1,1-trifluorohexane and 1,1,1-trifluorododecane.

By effective amount of compatibilizer is meant that amount of compatibilizer that leads to efficient solubilizing of the lubricant in the composition and thus provides adequate oil return to optimize operation of the refrigeration, air-conditioning or heat pump apparatus.

The compositions of the present invention will typically contain from about 0.1 to about 40 weight percent, preferably from about 0.2 to about 20 weight percent, and most preferably from about 0.3 to about 10 weight percent compatibilizer in the compositions of the present invention.

Further described herein is a method of solubilizing a refrigerant or heat transfer fluid composition comprising the compositions of the present invention in a refrigeration lubricant selected from the group consisting of mineral oils, alkylbenzenes, synthetic paraffins, synthetic naphthenes, and poly(alpha)olefins, wherein said method comprises contacting said lubricant with said composition in the presence of an effective amount of a compatibilizer, wherein said compatibilizer is selected from the group consisting of polyoxyalkylene glycol ethers, amides, nitriles, ketones, chlorocarbons, esters, lactones, aryl ethers, fluoroethers and 1,1,1-trifluoroalkanes.

Further described herein is a method for improving oil-return to the compressor in a compression refrigeration, air-conditioning or heat pump apparatus, said method comprising using a composition comprising compatibilizer in said apparatus.

The compositions of the present invention may further comprise an ultra-violet (UV) dye and optionally a solubilizing agent. The UV dye is a useful component for detecting leaks of the composition by permitting one to observe the fluorescence of the dye in the composition at a leak point or in the vicinity of refrigeration, air-conditioning, or heat pump apparatus. One may observe the fluorescence of the dye under an ultra-violet light. Solubilizing agents may be needed due to poor solubility of such UV dyes in some compositions.

By "ultra-violet" dye is meant a UV fluorescent composition that absorbs light in the ultra-violet or "near" ultra-violet region of the electromagnetic spectrum. The fluorescence produced by the UV fluorescent dye under illumination by a UV light that emits radiation with wavelength anywhere from 10 nanometer to 750 nanometer may be detected. Therefore, if a composition containing such a UV fluorescent dye is leaking from a given point in a refrigeration, air-conditioning, or heat pump apparatus, the fluorescence can be detected at the leak point. Such UV fluorescent dyes include but are not limited to naphthalimides, perylenes, coumarins, anthracenes, phenanthracenes, xanthenes, thioxanthenes, naphthoxanthenes, fluoresceins, and derivatives or combinations thereof.

Solubilizing agents may comprise at least one compound selected from the group consisting of hydrocarbons, hydrocarbon ethers, polyoxyalkylene glycol ethers, amides, nitriles, ketones, chlorocarbons, esters, lactones, aryl ethers, fluoroethers and 1,1,1-trifluoroalkanes. The polyoxyalkylene glycol ethers, amides, nitriles, ketones, chlorocarbons, esters, lactones, aryl ethers, fluoroethers and 1,1,1-trifluoroalkanes solubilizing agents have been defined previously herein as being compatibilizers for use with conventional refrigeration lubricants.

Hydrocarbon solubilizing agents may comprise hydrocarbons including straight chained, branched chain or cyclic alkanes or alkenes containing 5 or fewer carbon atoms and only hydrogen with no other functional groups. Representative hydrocarbon solubilizing agents comprise propane, propylene, cyclopropane, n-butane, isobutane, 2-methylbutane and n-pentane. It should be noted that if the composition contains a hydrocarbon, then the solubilizing agent may not be the same hydrocarbon.

Hydrocarbon ether solubilizing agents may comprise ethers containing only carbon, hydrogen and oxygen, such as dimethyl ether (DME).

Solubilizing agents may be present as a single compound, or may be present as a mixture of more than one solubilizing agent. Mixtures of solubilizing agents may contain two solubilizing agents from the same class of compounds, say two lactones, or two solubilizing agents from two different classes, such as a lactone and a polyoxyalkylene glycol ether.

In the present compositions comprising refrigerant and UV fluorescent dye, or comprising heat transfer fluid and UV fluorescent dye, from about 0.001 weight percent to about 1.0 weight percent of the composition is UV dye, preferably from about 0.005 weight percent to about 0.5 weight percent, and most preferably from 0.01 weight percent to about 0.25 weight percent.

Solubilizing agents such as ketones may have an objectionable odor, which can be masked by addition of an odor masking agent or fragrance. Typical examples of odor masking agents or fragrances may include Evergreen, Fresh Lemon, Cherry, Cinnamon, Peppermint, Floral or Orange Peel all commercially available, as well as d-limonene and pinene. Such odor masking agents may be used at concentrations of from about 0.001% to as much as about 15% by weight based on the combined weight of odor masking agent and solubilizing agent.

Solubility of these UV fluorescent dyes in the compositions of the present invention may be poor. Therefore, methods for introducing these dyes into the refrigeration, air-conditioning, or heat pump apparatus have been awkward, costly and time consuming. US patent no. RE 36,951 describes a method, which utilizes a dye powder, solid pellet or slurry of dye that may be inserted into a component of the refrigeration, air-conditioning, or heat pump apparatus. As refrigerant and lubricant are circulated through the apparatus, the dye is dissolved or dispersed and carried throughout the apparatus. Numerous other methods for introducing dye into a refrigeration or air conditioning apparatus are described in the literature.

Ideally, the UV fluorescent dye could be dissolved in the refrigerant itself thereby not requiring any specialized method for introduction to the refrigeration, air conditioning apparatus, or heat pump. The present invention relates to compositions including UV fluorescent dye, which may be introduced into the system as a solution in the refrigerant. The inventive compositions will allow the storage and transport of dye-containing compositions even at low temperatures while maintaining the dye in solution.

In the present compositions comprising refrigerant, UV fluorescent dye and solubilizing agent, or comprising heat transfer fluid and UV fluorescent dye and solubilizing agent, from about 1 to about 50 weight percent, preferably from about 2 to about 25 weight percent, and most preferably from about 5 to about 15 weight percent of the combined composition is solubilizing agent. In the compositions of the present invention the UV fluorescent dye is present in a concentration from about 0.001 weight percent to about 1.0 weight percent, preferably from 0.005 weight percent to about 0.5 weight percent, and most preferably from 0.01 weight percent to about 0.25 weight percent.

Further described herein is a method of using the compositions further comprising ultraviolet fluorescent dye, and optionally, solubilizing agent, in refrigeration, air-conditioning, or heat pump apparatus. The method comprises introducing the composition into the refrigeration, air-conditioning, or heat pump apparatus. This may be done by dissolving the UV fluorescent dye in the composition in the presence of a solubilizing agent and introducing the combination into the apparatus. Alternatively, this may be done by combining solubilizing agent and UV fluorescent dye and introducing said combination into refrigeration or air-conditioning apparatus containing refrigerant and/or heat transfer fluid. The resulting composition may be used in the refrigeration, air-conditioning, or heat pump apparatus.

The present invention further relates to a method of using the compositions comprising ultraviolet fluorescent dye to detect leaks. The presence of the dye in the compositions allows for detection of leaking refrigerant in a refrigeration, air-conditioning, or heat pump apparatus. Leak detection helps to address, resolve or prevent inefficient operation of the apparatus or system or equipment failure. Leak detection also helps one contain chemicals used in the operation of the apparatus.

The method comprises providing the composition comprising refrigerant, ultra-violet fluorescent dye, as described herein, and optionally, a solubilizing agent as described herein, to refrigeration, air-conditioning, or heat pump apparatus and employing a suitable means for detecting the UV fluorescent dye-containing refrigerant. Suitable means for detecting the dye include, but are not limited to, ultra-violet lamps, often referred to as a "black light" or "blue light". Such ultra-violet lamps are commercially available from numerous sources specifically designed for this purpose. Once the ultra-violet fluorescent dye containing composition has been introduced to the refrigeration, air-conditioning, or heat pump apparatus and has been allowed to circulate throughout the system, a leak can be found by shining said ultra-violet lamp on the apparatus and observing the fluorescence of the dye in the vicinity of any leak point.

The present invention further relates to a method for replacing a high GWP refrigerant in a refrigeration, air-conditioning, or heat pump apparatus, wherein said high GWP refrigerant is selected from the group consisting of R134a, R22, R245fa, R114, R236fa, R124, R410A, R407C, R417A, R422A, R507A, and R404A, said method comprising providing a composition of the present invention to said refrigeration, air-conditioning, or heat pump apparatus that uses, used or is designed to use said high GWP refrigerant.

Vapor-compression refrigeration, air-conditioning, or heat pump systems include an evaporator, a compressor, a condenser, and an expansion device. A vapor-compression cycle re-uses refrigerant in multiple steps producing a cooling effect in one step and a heating effect in a different step. The cycle can be described simply as follows. Liquid refrigerant enters an evaporator through an expansion device, and the liquid refrigerant boils in the evaporator at a low temperature to form a gas and produce cooling. The low-pressure gas enters a compressor where the gas is compressed to raise its pressure and temperature. The higher-pressure (compressed) gaseous refrigerant then enters the condenser in which the refrigerant condenses and discharges its heat to the environment. The refrigerant returns to the expansion device through which the liquid expands from the higher-pressure level in the condenser to the low-pressure level in the evaporator, thus repeating the cycle.

As used herein, mobile refrigeration apparatus or mobile air-conditioning apparatus refers to any refrigeration or air-conditioning apparatus incorporated into a transportation unit for the road, rail, sea or air. In addition, apparatus, which are meant to provide refrigeration or air-conditioning for a system independent of any moving carrier, known as "intermodal" systems, are included in the present invention. Such intermodal systems include "containers" (combined sea/land transport) as well as "swap bodies" (combined road and rail transport). The present invention is particularly useful for road transport refrigerating or air-conditioning apparatus, such as automobile air-conditioning apparatus or refrigerated road transport equipment.

The present invention further relates to a process for producing cooling comprising evaporating the compositions of the present invention in the vicinity of a body to be cooled, and thereafter condensing said compositions.

The present invention further relates to a process for producing heat comprising condensing the compositions of the present invention in the vicinity of a body to be heated, and thereafter evaporating said compositions.

The present invention further relates to a refrigeration, air-conditioning, or heat pump apparatus containing a composition of the present invention.

Further described herein is a mobile air-conditioning apparatus containing a composition of the present invention.

Further described herein is a method for early detection of a refrigerant leak in a refrigeration, air-conditioning or heat pump apparatus said method comprising using a non-azeotropic composition in said apparatus, and monitoring for a reduction in cooling performance. The non-azeotropic compositions will fractionate upon leakage from a refrigeration, air-conditioning or heat pump apparatus and the lower boiling (higher vapor pressure) component will leak out of the apparatus first. When this occurs, if the lower boiling component in that composition provides the majority of the refrigeration capacity, there will be a marked reduction in the capacity and thus performance of the apparatus. In an automobile air-conditioning system, as an example, the passengers in the automobile will detect a reduction in the cooling capability of the system. This reduction in cooling capability can be interpreted to mean that refrigerant is being leaked and that the system requires repair.

Further described herein is a method of using the compositions of the present invention as a heat transfer fluid composition, said process comprising transporting said composition from a heat source to a heat sink.

Heat transfer fluids are utilized to transfer, move or remove heat from one space, location, object or body to a different space, location, object or body by radiation, conduction, or convection. A heat transfer fluid may function as a secondary coolant by providing means of transfer for cooling (or heating) from a remote refrigeration (or heating) system. In some systems, the heat transfer fluid may remain in a constant state throughout the transfer process (i.e., not evaporate or condense). Alternatively, evaporative cooling processes may utilize heat transfer fluids as well.

A heat source may be defined as any space, location, object or body from which it is desirable to transfer, move or remove heat. Examples of heat sources may be spaces (open or enclosed) requiring refrigeration or cooling, such as refrigerator or freezer cases in a supermarket, building spaces requiring air-conditioning, or the passenger compartment of an automobile requiring air-conditioning. A heat sink may be defined as any space, location, object or body capable of absorbing heat. A vapor compression refrigeration system is one example of such a heat sink.

## Claims

1. A composition comprising 1 to 98 weight percent HFC-227ea, 1 to 98 weight percent trans-HFC-1234ze and up to 98 weight percent HFC-1225ye; 1 to 98 weight percent HFC-227ea, 1 to 98 weight percent trans-HFC-1234ze and up to 98 weight percent HFC-1243zf; 1 to 98 weight percent HFC-227ea, 1 to 98 weight percent trans-HFC-1234ze and up to 98 weight percent HFC-134; or 1 to 98 weight percent HFC-227ea, 1 to 98 weight percent trans-HFC-1234ze and up to 40 weight percent n-butane; preferably 10 to 80 weight percent HFC-227ea, 10 to 80 weight percent trans-HFC-1234ze and up to 80 weight percent HFC-1225ye; 10 to 80 weight percent HFC-227ea, 10 to 80 weight percent trans-HFC-1234ze and up to 80 weight percent HFC-1243zf; 10 to 80 weight percent HFC-227ea, 10 to 80 weight percent trans-HFC-1234ze and up to 80 weight percent HFC-134; or 10 to 80 weight percent HFC-227ea, 10 to 80 weight percent trans-HFC-1234ze and up to 30 weight percent n-butane.

2. The composition of claim 1, selected from the group consisting of:
1 to 98 weight percent HFC-227ea, 1 to 98 weight percent trans-HFC-1234ze and 1 to 98 weight percent HFC-1225ye; 1 to 98 weight percent HFC-227ea, 1 to 98 weight percent trans-HFC-1234ze and 1 to 98 weight percent HFC-1243zf; 1 to 98 weight percent HFC-227ea, 1 to 98 weight percent trans-HFC-1234ze and 1 to 98 weight percent HFC-134; and 1 to 98 weight percent HFC-227ea, 1 to 98 weight percent trans-HFC-1234ze and 1 to 40 weight percent n-butane; preferably 10 to 80 weight percent HFC-227ea, 10 to 80 weight percent trans-HFC-1234ze and 10 to 80 weight percent HFC-1225ye; 10 to 80 weight percent HFC-227ea, 10 to 80 weight percent trans-HFC-1234ze and 10 to 80 weight percent HFC-1243zf; 10 to 80 weight percent HFC-227ea, 10 to 80 weight percent trans-HFC-1234ze and 10 to 80 weight percent HFC-134; and 10 to 80 weight percent HFC-227ea, 10 to 80 weight percent trans-HFC-1234ze and 1 to 30 weight percent n-butane.

3. The composition of claim 1 comprising a near-azeotropic composition selected from the group consisting of:
1 to 98 weight percent HFC-227ea, 1 to 98 weight percent trans-HFC-1234ze and 1 to 98 weight percent HFC-1225ye; 1 to 98 weight percent HFC-227ea, 1 to 98 weight percent trans-HFC-1234ze and 1 to 98 weight percent HFC-1243zf; 1 to 98 weight percent HFC-227ea, 1 to 98 weight percent trans-HFC-1234ze and 1 to 98 weight percent HFC-134; and 1 to 98 weight percent HFC-227ea, 1 to 98 weight percent trans-HFC-1234ze and 1 to 40 weight percent n-butane.

4. The composition of claim 1, 2 or 3, further comprising a lubricant selected from the group consisting of mineral oils, such as paraffins, naphthenes and aromatics, alkylaryls, such as linear and branched alkyl alkylbenzenes, synthetic paraffins, synthetic naphthenes, poly(alphaolefins), polyol esters, polyalkylene glycols, and polyvinyl ethers.

5. The composition of claim 1, 2 or 3, further comprising 0.01 to 5 weight percent of a stabilizer, free radical scavenger, antioxidant or combinations thereof, preferably selected from nitromethane, hindered phenols, hydroxylamines, thiols, phosphites and lactones.

6. The composition of claim 1, 2 or 3, further comprising 0.01 to 5 weight percent of a water scavenger, wherein the water scavenger preferably comprises ortho esters, such as trimethylortho formate, triethylortho formate, or tripropylortho formate.

7. The composition of claim 1, 2 or 3, further comprising a tracer selected from the group consisting of hydrofluorocarbons, deuterated hydrocarbons, deuterated hydrofluorocarbons, perfluorocarbons, fluoroethers, brominated compounds, iodated compounds, alcohols, aldehydes, ketones, nitrous oxide (N₂O) and combinations thereof.

8. The composition of claim 7, wherein the tracer or tracer blend is present in the composition at a total concentration of 50 to 1000 parts per million by weight (ppm).

9. The composition of claim 1, 2 or 3, further comprising at least one ultra-violet fluorescent dye selected from the group consisting of naphthalimides, perylenes, coumarins, anthracenes, phenanthracenes, xanthenes, thioxanthenes, naphthoxanthenes, fluoresceins, derivatives of said dye and combinations thereof.

10. A method for detecting the composition of claim 9 in a compression refrigeration or air conditioning apparatus, the method comprising providing the composition to the apparatus, and providing a suitable means for detecting the composition at a leak point or in the vicinity of the apparatus.

11. A method of producing cooling, the method comprising: evaporating the composition of any one of claims 1 to 9 in the vicinity of a body to be cooled and thereafter condensing the composition.

12. A method of producing heating, the method comprising: condensing the composition of any one of claims 1 to 9 in the vicinity of a body to be heated and thereafter evaporating the composition.

13. A method for replacing a high GWP refrigerant in a refrigeration, air conditioning, or heat pump apparatus, wherein the high GWP refrigerant is selected from the group consisting of R134a, R22, R123, R11, R245fa, R114, R236fa, R124, R12, R410A, R407C, R417A, R422A, R507A, R502, and R404A, the method comprising providing the composition of any one of claims 1 to 9 to the refrigeration, air conditioning, or heat pump apparatus that uses, used or is designed to use the high GWP refrigerant.

14. A refrigeration apparatus, air-conditioning apparatus, or heat pump apparatus containing the composition of any one of claims 1 to 9, wherein the refrigeration apparatus preferably is a mobile refrigeration apparatus and the air-conditioning apparatus preferably is a mobile air-conditioning apparatus, more preferably an automobile air-conditioning apparatus.

## Patentansprüche

1. Zusammensetzung, umfassend 1 bis 98 Gewichtsprozent HFC-227ea, 1 bis 98 Gewichtsprozent trans-HFC-1234ze und bis zu 98 Gewichtsprozent HFC-1225ye; 1 bis 98 Gewichtsprozent HFC-227ea, 1 bis 98 Gewichtsprozent trans-HFC-1234ze und bis zu 98 Gewichtsprozent HFC-1243zf; 1 bis 98 Gewichtsprozent HFC-227ea, 1 bis 98 Gewichtsprozent trans-HFC-1234ze und bis zu 98 Gewichtsprozent HFC-134; oder 1 bis 98 Gewichtsprozent HFC-227ea, 1 bis 98 Gewichtsprozent trans-HFC-1234ze und bis zu 40 Gewichtsprozent n-Butan; vorzugsweise 10 bis 80 Gewichtsprozent HFC-227ea, 10 bis 80 Gewichtsprozent trans-HFC-1234ze und bis zu 80 Gewichtsprozent HFC-1225ye; 10 bis 80 Gewichtsprozent HFC-227ea, 10 bis 80 Gewichtsprozent trans-HFC-1234ze und bis zu 80 Gewichtsprozent HFC-1243zf; 10 bis 80 Gewichtsprozent HFC-227ea, 10 bis 80 Gewichtsprozent trans-HFC-1234ze und bis zu 80 Gewichtsprozent HFC-134; oder 10 bis 80 Gewichtsprozent HFC-227ea, 10 bis 80 Gewichtsprozent trans-HFC-1234ze und bis zu 30 Gewichtsprozent n-Butan.

2. Zusammensetzung nach Anspruch 1, ausgewählt aus der Gruppe bestehend aus:
1 bis 98 Gewichtsprozent HFC-227ea, 1 bis 98 Gewichtsprozent trans-HFC-1234ze und 1 bis 98 Gewichtsprozent HFC-1225ye; 1 bis 98 Gewichtsprozent HFC-227ea, 1 bis 98 Gewichtsprozent trans-HFC-1234ze und 1 bis 98 Gewichtsprozent HFC-1243zf; 1 bis 98 Gewichtsprozent HFC-227ea, 1 bis 98 Gewichtsprozent trans-HFC-1234ze und 1 bis 98 Gewichtsprozent HFC-134; und 1 bis 98 Gewichtsprozent HFC-227ea, 1 bis 98 Gewichtsprozent trans-HFC-1234ze und 1 bis 40 Gewichtsprozent n-Butan; vorzugsweise 10 bis 80 Gewichtsprozent HFC-227ea, 10 bis 80 Gewichtsprozent trans-HFC-1234ze und 10 bis 80 Gewichtsprozent HFC-1225ye; 10 bis 80 Gewichtsprozent HFC-227ea, 10 bis 80 Gewichtsprozent trans-HFC-1234ze und 10 bis 80 Gewichtsprozent HFC-1243zf; 10 bis 80 Gewichtsprozent HFC-227ea, 10 bis 80 Gewichtsprozent trans-HFC-1234ze und 10 bis 80 Gewichtsprozent HFC-134; und 10 bis 80 Gewichtsprozent HFC-227ea, 10 bis 80 Gewichtsprozent trans-HFC-1234ze und 1 to 30 Gewichtsprozent n-Butan.

3. Zusammensetzung nach Anspruch 1, umfassend eine fast azeotrope Zusammensetzung, ausgewählt aus der Gruppe, bestehend aus:
1 bis 98 Gewichtsprozent HFC-227ea, 1 bis 98 Gewichtsprozent trans-HFC-1234ze und 1 bis 98 Gewichtsprozent HFC-1225ye; 1 bis 98 Gewichtsprozent HFC-227ea, 1 bis 98 Gewichtsprozent trans-HFC-1234ze und 1 bis 98 Gewichtsprozent HFC-1243zf; 1 bis 98 Gewichtsprozent HFC-227ea, 1 bis 98 Gewichtsprozent trans-HFC-1234ze und 1 bis 98 Gewichtsprozent HFC-134; und 1 bis 98 Gewichtsprozent HFC-227ea, 1 bis 98 Gewichtsprozent trans-HFC-1234ze und 1 bis 40 Gewichtsprozent n-Butan.

4. Zusammensetzung nach Anspruch 1, 2 oder 3, ferner umfassend ein Schmiermittel, ausgewählt aus der Gruppe, bestehend aus Mineralölen, wie etwa Paraffinen, Naphthenen und Aromaten, Alkylarylen, wie etwa geradlinigen und verzweigten Alkylalkylbenzenen, synthetischen Paraffinen, synthetischen Naphthenen, Poly(alpha)olefinen, Polyolestern, Polyalkylenglycolen und Polyvinylethern.

5. Zusammensetzung nach Anspruch 1, 2 oder 3, ferner umfassend 0,01 bis 5 Gewichtsprozent eines Stabilisators, eines freien Radikalfängers, eines Antioxidans oder Kombinationen davon, vorzugsweise ausgewählt aus Nitromethan, gehinderten Phenolen, Hydroxylaminen, Thiolen, Phosphiten und Lactonen.

6. Zusammensetzung nach Anspruch 1, 2 oder 3, ferner umfassend 0,01 bis 5 Gewichtsprozent eines Wasserfängers, wobei der Wasserfänger vorzugsweise Orthoester, wie etwa Trimethylorthoformat, Triethylorthoformat oder Tripropylorthoformat umfasst.

7. Zusammensetzung nach Anspruch 1, 2 oder 3, ferner umfassend einen Tracer, ausgewählt aus der Gruppe, bestehend aus Fluorkohlenwasserstoffen, deuterierten Kohlenwasserstoffen, deuterierten Fluorkohlenwasserstoffen, Perfluorkohlenstoffen, Fluorethern, bromierten Verbindungen, iodierten Verbindungen, Alkoholen, Aldehyden, Ketonen, Distickstoffmonoxid (N₂O) und Kombinationen davon.

8. Zusammensetzung nach Anspruch 7, wobei der Tracer oder die Tracermischung in der Zusammensetzung in einer Gesamtkonzentration von 50 bis 1000 Teilen pro Million auf das Gewicht bezogen (ppm) vorliegt.

9. Zusammensetzung nach Anspruch 1, 2 oder 3, ferner umfassend mindestens einen Ultraviolettfluoreszenzfarbstoff, ausgewählt aus der Gruppe, bestehend aus Naphtalimiden, Perylenen, Cumarinen, Anthracenen, Phenanthracenen, Xanthenen, Thioxanthenen, Naphthoxanthenen, Fluoresceinen, Derivaten des Farbstoffes und Kombinationen davon.

10. Verfahren zum Erfassen der Zusammensetzung nach Anspruch 9 in einer Kompressionskühl- oder Klimaanlagenvorrichtung, wobei das Verfahren das Bereitstellen der Zusammensetzung an die Vorrichtung und Bereitstellen eines geeigneten Mittels zum Erfassen der Zusammensetzung an einem Austrittspunkt oder in der Nähe der Vorrichtung umfasst.

11. Verfahren zum Erzeugen von Kühlung, das Verfahren umfassend: Verdampfen der Zusammensetzung nach einem der Ansprüche 1 bis 9 in der Nähe eines zu kühlenden Körpers und danach Kondensieren der Zusammensetzung.

12. Verfahren zum Erzeugen von Erwärmung, das Verfahren umfassend: Kondensieren der Zusammensetzung nach einem der Ansprüche 1 bis 9 in der Nähe eines zu erwärmenden Körpers und danach Verdampfen der Zusammensetzung.

13. Verfahren zum Ersetzen eines Kühlmittels mit hohem GWP in einer Kühl-, Klimaanlagen- oder Wärmepumpenvorrichtung, wobei das Kühlmittel mit hohem GWP aus der Gruppe, bestehend aus R134a, R22, R123, R11, R245fa, R114, R236fa, R124, R12, R410A, R407C, R417A, R422A, R507A, R502 und R404A, ausgewählt ist, wobei das Verfahren das Bereitstellen der Zusammensetzung nach einem der Ansprüche 1 bis 9 an die Kühl-, Klimaanlagen- oder Wärmepumpenvorrichtung umfasst, die das Kühlmittel mit hohem GWP verwendet, verwendet hat oder darauf ausgelegt ist, es zu verwenden.

14. Kühlvorrichtung, Klimaanlagenvorrichtung oder Wärmepumpenvorrichtung, enthaltend die Zusammensetzung nach einem der Ansprüche 1 bis 9, wobei die Kühlvorrichtung vorzugsweise eine mobile Kühlvorrichtung ist und die Klimaanlagenvorrichtung vorzugsweise eine mobile Klimaanlagenvorrichtung ist, mehr bevorzugt eine automobile Klimaanlagenvorrichtung.

## Revendications

1. Composition comprenant de 1 à 98% en poids de HFC-227ea, de 1 à 98% en poids de trans-HFC-1234ze et jusqu'à 98% en poids de HFC-1225ye; de 1 à 98% en poids de HFC-227ea, de 1 à 98% en poids de trans-HFC-1234ze et jusqu'à 98% en poids de HFC-1243zf; de 1 à 98% en poids de HFC-227ea, de 1 à 98% en poids de trans-HFC-1234ze et jusqu'à 98% en poids de HFC-134; ou de 1 à 98% en poids de HFC-227ea, de 1 à 98% en poids de trans-HFC-1234ze et jusqu'à 40% en poids de n-butane; de préférence 10 à 80% en poids de HFC-227ea, de 10 à 80% en poids de trans-HFC-1234ze et jusqu'à 80% en poids de HFC-1225ye; de 10 à 80% en poids de HFC-227ea, de 10 à 80% en poids de trans-HFC-1234ze et jusqu'à 80% en poids de HFC-1243zf; de 10 à 80% en poids de HFC-227ea, de 10 à 80% en poids de trans-HFC-1234ze et jusqu'à 80% en poids de HFC-134; ou de 10 à 80% en poids de HFC-227ea, de 10 à 80% en poids de trans-HFC-1234ze et jusqu'à 30% en poids de n-butane.

2. Composition selon la revendication 1, choisie dans le groupe constitué:
de 1 à 98% en poids de HFC-227ea, de 1 à 98% en poids de trans-HFC-1234ze et de 1 à 98% en poids de HFC-1225ye; de 1 à 98% en poids de HFC-227ea, de 1 à 98% en poids de trans-HFC-1234ze et de 1 à 98% en poids de HFC-1243zf; de 1 à 98% en poids de HFC-227ea, de 1 à 98% en poids de trans-HFC-1234ze et de 1 à 98% en poids de HFC-134; et de 1 à 98% en poids de HFC-227ea, de 1 à 98% en poids de trans-HFC-1234ze et de 1 à 40% en poids de n-butane; de préférence de 10 à 80% en poids de HFC-227ea, de 10 à 80% en poids de trans-HFC-1234ze et de 10 à 80% en poids de HFC-1225ye; de 10 à 80% en poids de HFC-227ea, de 10 à 80% en poids de trans-HFC-1234ze et de 10 à 80% en poids de HFC-1243zf; de 10 à 80% en poids de HFC-227ea, de 10 à 80% en poids de trans-HFC-1234ze et de 10 à 80% en poids de HFC-134; et de 10 à 80% en poids de HFC-227ea, de 10 à 80% en poids de trans-HFC-1234ze et de 1 à 30% en poids de n-butane.

3. Composition selon la revendication 1 comprenant une composition quasi azéotropique choisie dans le groupe constitué de:
de 1 à 98% en poids de HFC-227ea, de 1 à 98% en poids de trans-HFC-1234ze et de 1 à 98% en poids de HFC-1225ye; de 1 à 98% en poids de HFC-227ea, de 1 à 98% en poids de trans-HFC-1234ze et de 1 à 98% en poids de HFC-1243zf; de 1 à 98% en poids de HFC-227ea, de 1 à 98% en poids de trans-HFC-1234ze et de 1 à 98% en poids de HFC-134; et de 1 à 98% en poids de HFC-227ea, de 1 à 98% en poids de trans-HFC-1234ze et de 1 à 40% en poids de n-butane.

4. Composition selon la revendication 1, 2 ou 3, comprenant en outre un lubrifiant choisi dans le groupe constitué de : huiles minérales, telles que les paraffines, les naphtènes et les composés aromatiques, alkylaryles, tels que les alkylalkylbenzènes linéaires et ramifiés, paraffines synthétiques, naphtènes synthétiques, poly (alpha-oléfines), esters de polyol, polyalkylène glycols et éthers polyvinyliques.

5. Composition selon la revendication 1, 2 ou 3, comprenant en outre 0,01 à 5 pour cent en poids d'un stabilisant, d'un capteur de radicaux libres, d'un antioxydant ou de combinaisons de ceux-ci, de préférence choisis parmi : nitrométhane, phénols encombrés, hydroxylamines, thiols, phosphites et lactones.

6. Composition selon la revendication 1, 2 ou 3, comprenant en outre 0,01 à 5 pour cent en poids d'un capteur d'eau, dans laquelle le capteur d'eau comprend de préférence des orthoesters, tels que le triméthylorthoformiate, le triéthylorthoformiate ou le tripropylorthoformiate.

7. Composition selon la revendication 1, 2 ou 3, comprenant en outre un traceur choisi dans le groupe constitué de : hydrofluorocarbures, hydrocarbures deutérés, hydrofluorocarbures deutérés, perfluorocarbures, éthers fluorés, composés bromés, composés iodés, alcools, aldéhydes, cétones, oxyde nitreux (N₂O) et des combinaisons de ceux-ci.

8. Composition selon la revendication 7, dans laquelle le traceur ou mélange de traceurs est présent dans la composition à une concentration totale de 50 à 1000 parties par million en poids (ppm).

9. Composition selon la revendication 1, 2 ou 3, comprenant en outre au moins un colorant fluorescent ultraviolet choisi dans le groupe constitué de : naphtalimides, pérylènes, coumarines, anthracènes, phénanthracènes, xanthènes, thioxanthènes, naphtoxanthènes, fluorescéines, dérivés dudit colorant et des combinaisons de ceux-ci.

10. Procédé de détection de la composition selon la revendication 9 dans un appareil de réfrigération par compression ou de climatisation, le procédé comprenant la fourniture de la composition à l'appareil, et la fourniture d'un moyen approprié pour détecter la composition à un point de fuite ou à proximité de l'appareil.

11. Procédé de production de refroidissement, le procédé comprenant: l'évaporation de la composition selon l'une quelconque des revendications 1 à 9 au voisinage d'un corps à refroidir et ensuite la condensation de la composition.

12. Procédé de production de chauffage, le procédé comprenant: la condensation de la composition selon l'une quelconque des revendications 1 à 9 au voisinage d'un corps à chauffer et ensuite l'évaporation de la composition.

13. Procédé pour remplacer un réfrigérant à PRP élevé dans un appareil de réfrigération, de conditionnement d'air ou de pompe à chaleur, dans lequel ledit réfrigérant à PRP élevé est choisi dans le groupe constitué par R134a, R22, R123, R11, R245fa, R114, R236fa, R124 , R12, R410A, R407C, R417A, R422A, R507A, R502 et R404A, ledit procédé comprenant la fourniture de la composition selon l'une quelconque des revendications 1 à 9 audit appareil de réfrigération, de conditionnement d'air ou de pompe à chaleur qui utilise, a utilisé ou est conçu pour utiliser ledit réfrigérant à PRP élevé.

14. Appareil de réfrigération, appareil de conditionnement d'air ou appareil de pompe à chaleur contenant la composition selon l'une quelconque des revendications 1 à 9, dans lequel l'appareil de réfrigération est de préférence un appareil de réfrigération mobile et l'appareil de conditionnement d'air est de préférence un appareil de conditionnement d'air mobile, plus préférablement un appareil de conditionnement d'air automobile.
